# EUROPÄISCHE PATENTSCHRIFT

(11) **EP 2 120 002 B1**
(45) Veröffentlichungstag und Bekanntmachung des Hinweises auf die Patenterteilung: **03.01.2018**
(21) Anmeldenummer: 09005457.8
(22) Anmeldetag: 17.04.2009
(51) Int. Cl.: F41H 11/02, F41G 5/08

(54) **Verfahren zur Klassifikation von anfliegenden RAM-Geschossen**
Method for classifying incoming RAM-projectiles
Méthode de classification de projectiles du type RAM en approche

(30) Priorität: 15.05.2008 DE 102008023520
(43) Veröffentlichungstag der Anmeldung: 18.11.2009
(73) Patentinhaber: Airbus Defence and Space GmbH, 85521 Ottobrunn (DE)
(72) Erfinder: Bodenmüller, Albert, 89179 Beimerstetten (DE)
(74) Vertreter: Meel, Thomas

(56) Entgegenhaltungen:
- US-A1- 2006 092 075
- US-A1- 2006 097 102
- US-A1- 2007 018 884
- US-B1- 7 202 809

## Beschreibung

Die Erfindung betrifft ein Verfahren zur Klassifikation von RAM-Geschossen.

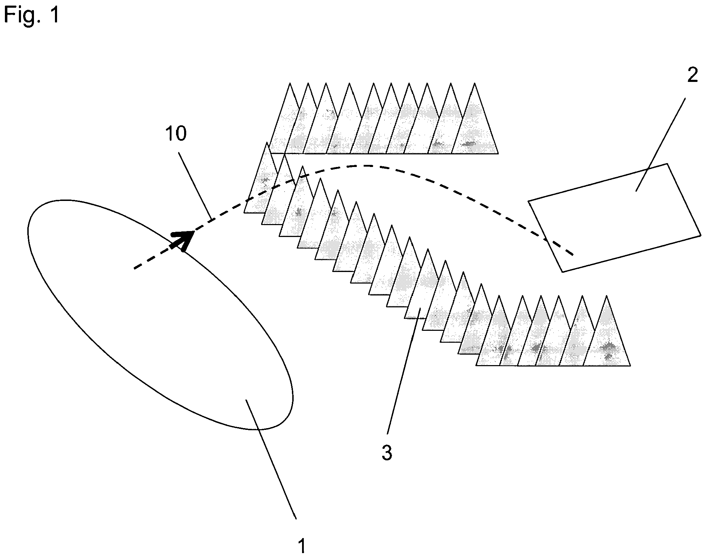

Für den Feldlagerschutz ist die Abwehr terroristischer Angriffe durch Artillerie- und Mörsergranaten eine elementare Aufgabe zum Schutz der dort untergebrachten Soldaten. Mögliche asymmetrische Angriffe mittels sogenannter RAM-Geschosse (Rocket, Artillery and Mortar) sind bei unwegsamen Gelände, besonders Bergland, Hügeln usw. umso schwerer zu detektieren, als die dazu eingesetzten Sensoren (insbesondere Radarsensoren) oft nur einen Teil der Flugbahn einsehen können. Dies wird durch Clutter/Reflexionen, kleinen Rückstrahlquerschnitt der Ziele usw. noch erschwert. Die Ausgangssituation ist in Fig. 1 dargestellt. Das RAM-Geschoss 10 wird aus einer Gefahrenzone 1 (z.B. Freischärler, Terroristen) auf die Schutzzone 2 (z.B. Feldlager) abgeschossen, wobei eine natürliche Deckung 3 (Gebirge, Hügel, Bewuchs) vorhanden ist. Unter einem RAM-Geschoss wird solche Munition verstanden, die sich auf einer ballistischen Flugbahn bewegt - in Abgrenzung zu angetriebenen und lenkbaren Flugkörpern. Die DE 101 17 007 A1 zeigt ein Verfahren und eine Vorrichtung zum Schutz mobiler militärischer Einrichtungen.

Eine erfolgreiche Bekämpfung hängt stark von der rechtzeitigen Detektion und Klassifikation des Geschosses als RAM-Ziel ab, damit geeignete Waffensysteme, wie z.B. das System Skyshield der Firma Oerlikon Contraves, rechtzeitig Wirkmittel den Zielen entgegen feuern können.

Zur Unterstützung der Klassifikation (Erkennung) von RAM-Geschossen ist es Stand der Technik, eine so genannte Flugprofilanalyse durchzuführen, bei der die Kinematik des ballistischen Flugs des Geschosses ermittelt wird. Wurde ein Geschoss anhand relativ einfacher Auswertung der Kinematik als "potentiell verdächtig" und "gefährlich" eingestuft, so wird anhand der kinematischen Daten mittels Flugprofilanalyse ermittelt, ob dieses Geschoss eine dazu passende ballistische Flugbahn fliegt.

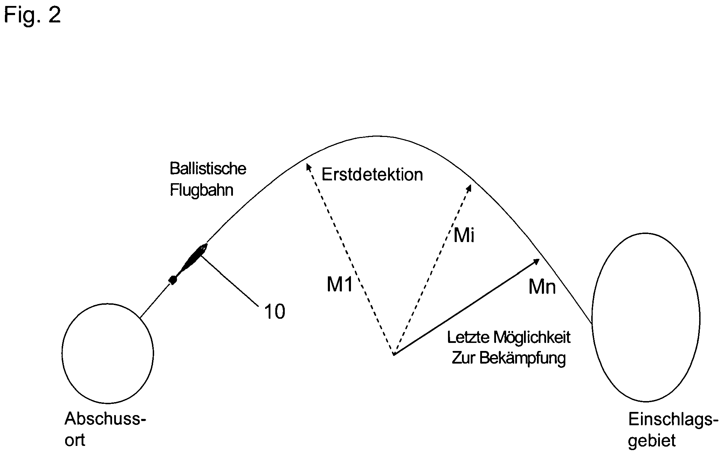

Diese Berechnung ist aufwendig und benötigt mehrere aufeinanderfolgende Messpositionen M1, Mi, Mn (Fig. 2). Deren Zahl sollte prinzipiell möglichst groß sein mit entsprechend kleinen zeitlichen Abständen, also mit hoher Update-Frequenz. Die Folge ist, dass für die Berechnung eine gewisse Zeitspanne benötigt wird. Diese Zeitspanne ist von entscheidender Bedeutung für die Abwehr des Geschosses, denn je später ein Geschoss überhaupt detektiert und klassifiziert wird, desto näher ist es, bis eine Bekämpfung eingeleitet werden kann. Die DE 196 38 968 A1 zeigt ein Verfahren und eine Vorrichtung zur Bekämpfung anfliegender Flugkörper mit einer reduzierten Datenmenge zur Berechnung.

Geht man bei einem typischen Bodenüberwachungsradar von 5 kinematischen Updates bei 2 Sekunden Umdrehungszeit aus, werden 10 s Zeit vergehen, bis ein Ziel nach Ermittlung seiner ballistischen Flugbahn als RAM Geschoss klassifiziert wird. Diese beispielhaften 10 s werden bei jedem neu auftretenden RAM-Geschoss aufs Neue benötigt.

Die US 7,202,809 B1 beschreibt eine Plattform zur Bekämpfung von Granaten, die einen Raketenantrieb aufweisen, sogenannten RPGs (rocket propelled grenades). Die Plattform umfasst Warnsensoren sowie Zielverfolgungssensoren, deren Sensorinformationen mit vorgespeicherten Informationen bezüglich Abschussprofilen von potentiellen Bedrohungen verglichen werden, um daraus eine optimale Bekämpfungslösung abzuleiten.

Die US 2006/0092075 A1 beschreibt ein Verfahren zur Klassifikation von Mörsergeschossen, wobei mittels Radarsensor die Trajektorie des Geschosses vermessen wird. Aus den gemessenen Bahnpunkten der Trajektorie wird ermittelt, ob es sich um ein ballistisches Geschoss handelt.

Der Erfindung liegt die Aufgabe zugrunde, ein Verfahren zur Klassifikation von Geschossen zu schaffen, mit dem ein RAM-Geschoss schneller erkannt wird als bei den herkömmlichen Verfahren.

Diese Aufgabe wird mit dem Verfahren nach Anspruch 1 gelöst. Vorteilhafte Ausführungen sind Gegenstand weiterer Ansprüche.

Wurde bereits ein Geschoss mit hinreichender Güte anhand einer Flugprofilanalyse als RAM-Geschoss klassifiziert, kann um die ermittelten Flugbahn eine räumliche Zone (im Folgenden als "räumliche Prüfzone" bezeichnet) generiert werden, die dem angenäherten ballistischen Flugbereich dieses Geschosses (bezogen auf denselben Abschussort) entspricht. Bei unverändertem Abschussort ist deshalb zu erwarten, dass auch nachfolgende Geschosse innerhalb dieser Zone liegen.

Diese räumliche Prüfzone wird auf der Basis von a-priori Daten und Parametern, die das typisches Flugverhalten von RAM-Munition wiederspiegeln und/oder aus den kinematischen Daten (Position, Geschwindigkeit, Beschleunigung) des Geschosses aus der Flugprofilanalyse berechnet.

Werden in der räumlichen Prüfzone nachfolgend weitere Geschosse detektiert (je nach gewünschter Genauigkeit kann die Prüfung anhand einem oder mehrerer Zeitpunkte erfolgen), kann mit hoher Wahrscheinlichkeit auch ohne die rechen- und zeitaufwändige Flugprofilanalyse sehr schnell auf RAM-Geschosse geschlossen werden. Somit verbleibt mehr Zeit für eine erfolgreiche Bekämpfung. Zur Erhöhung der Klassifikationsgüte können zusätzlich die vorhandenen kinematischen Daten aus der Flugprofilanalyse verwendet werden, um die aufgrund Vergleich mit der räumlichen Prüfzone ermittelte Klassifikation entweder zu bestätigen oder zu verwerfen.

Zur Optimierung des erfindungsgemäßen Verfahrens kann vor dem Vergleich mit der räumlichen Prüfzone eine Vorprüfung mit vergleichsweise geringem Rechenaufwand durchgeführt werden, um offensichtlich nicht relevante Geschosse frühzeitig zu eliminieren. Dies kann anhand einfacher kinematischer Daten des Geschosses geschehen (z.B. durch Vergleich mit Schwellwerten für Beschleunigung oder Geschwindigkeit, die für RAM-Geschosse typisch sind). Eine andere Möglichkeit ist der Abgleich der kinemtatischen Werte mit Abschuss- und Einschlagsort des bereits klassifizierten RAM-Geschosses. Somit werden nur solche Geschosse für die weitere Verarbeitung zugelassen, die als potentiell verdächtig und gefährlich und typisch für RAM Ziele einzustufen sind.

Zu Beginn der Verarbeitung, also nach dem ersten Beschuss, wird z.B. mittels a-priori Daten, also Default-Parametern, die räumliche Prüfzone um die Flugbahn des RAM-Geschosses festgelegt. In einer vorteilhaften Ausführung des erfindungsgemäßen Verfahrens wird die räumliche Prüfzone kontinuierlich dem tatsächlichen Verhalten des angreifenden Waffensystems angepasst. Dazu werden die kinematischen Daten von weiteren Geschossen, die zuvor als RAM-Geschoss klassifiziert wurden, in einem ausreichend dimensionierten internen Speicher gepuffert. Mittels eines Hintergrundprozesses, der so priorisiert ist, dass die Hauptaufgabe des Führungs- und Waffeneinsatzsystems nicht gefährdet ist, oder mittels eines weiteren Prozessors für solche Aufgaben, kann die räumliche Prüfzone mit Hilfe dieser Messdaten immer detaillierter und kontinuierlich berechnet bzw. modifiziert werden, ohne dass die laufende Klassifizierung deswegen verlangsamt wird. Die Optimierung der Prüfzone muss also nicht während der eigentlichen Klassifikationsaufgabe für ein neues Ziel geschehen, sondern kann zu einem günstigeren Zeitpunkt stattfinden, wenn ggf. umfangreichere Messdaten (insbesondere aus der Flugprofilanalyse) verfügbar sind.

Somit wird aus einem anfangs nur grob geschätzten Raumbereich ein immer exakterer, durch wiederholte Messungen bestätigter Bereich.

Mit dem erfindungsgemäßen Verfahren sind die folgenden Vorteile verbunden: Vorteile für die Klassifikationsaufgabe:
- zeitlich stark verkürzte Klassifikation bei wiederauftretenden Geschossen ausgehend von einem temporär fixen Abschussort,
- aufwendige ballistische Auswertung (Flugprofilanalyse) muss nicht für jedes Geschoss separat durchgeführt werden,
- eine fortlaufende Optimierung der Form des angenommen Flugbahnbereiches (räumliche Prüfzone) ist möglich,
- Ballistische Auswertung weiterer Ziele zur Optimierung der räumlichen Prüfzone kann bezüglich Zeitpunkt der Auswertung, Selektion geeigneter Messdaten, verfügbarer Performance, Priorisierung der Aufgabe, Nutzung von Hintergrundprozessen, Datenbank-Abfragen für relevante Zusatzinformationen usw. optimiert werden.

Vorteile für ein Gesamtsystem zur Flugabwehr:
- Nutzung der räumlichen Prüfzone für beschleunigte Initiierung von Tracks im Tracking des Aufklärungs-Sensors,
- damit Zeitgewinn für Bekämpfung und Gegenmaßnahmen,
- priorisierte Bekämpfung von Zielen, die sich innerhalb der räumlichen Prüfzone befinden, ist möglich,
- Nutzung der räumlichen Prüfzone für optimale Zuweisung des bekämpfenden Waffensystems und zur Munitionsauswahl ist möglich,
- Nutzung der räumlichen Prüfzone zur Einweisung weiterer spezieller Sensoren für :
   o verbesserte Detektion
   o zusätzliche Verifikation von RAM Zielen oder Zweifelsfällen.

Die Erfindung wird anhand von Fig. näher erläutert. Es zeigen:
- Fig. 1: die Bedrohung einer Schutzzone (z.B. Feldlager) durch RAM-Geschosse, wie in der Beschreibungseinleitung erläutert;
- Fig. 2: eine Skizze zur Detektion und Bekämpfung eines RAM-Geschosses, wie in der Beschreibungseinleitung erläutert;
- Fig. 3a,b: eine beispielhafte Ausführung der räumlichen Prüfzone zur Erkennung von RAM-Geschossen;
- Fig. 4: eine weitere Ausführung der räumlichen Prüfzone, zusammengesetzt aus mehreren Einzelsegmenten;
- Fig. 5: ein Ablaufplan zur Generierung der räumlichen Prüfzone;
- Fig. 6: ein Ablaufplan zur Durchführung des erfindungsgemäßen Verfahrens mit fortlaufender Optimierung der räumlichen Prüfzone.

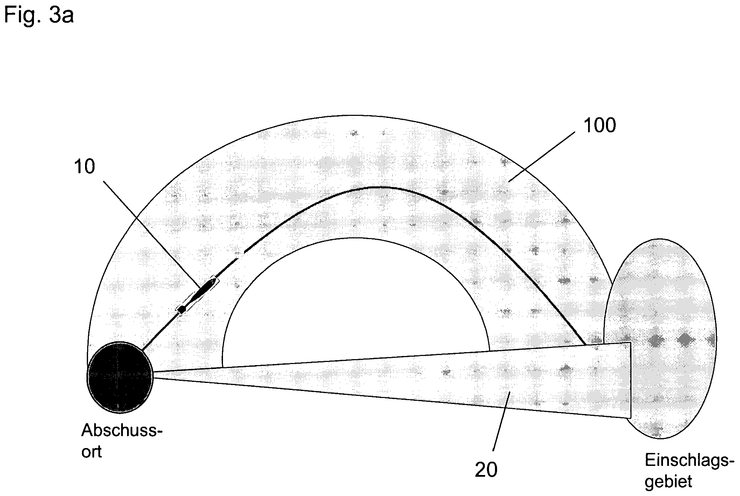

Fig. 3a zeigt beispielhaft die Form einer räumlichen Prüfzone 100, wie sie in dem erfindungsgemäßen Verfahren verwendet wird. Die räumliche Prüfzone 100 umgibt die zuvor detektierte ballistische Flugbahn einer bereits als RAM-Geschoss 10 klassifizierten Munition. Diese räumliche Prüfzone 100 kann unter Zuhilfenahme von a-priori Daten und Parametern welche das typisches Zielverhalten von RAM-Munition wiederspiegeln berechnet werden, ggf. unter Einbeziehung kinematischer Daten (Position, Geschwindigkeit, Beschleunigung) des früheren Geschosses aus der Flugprofilanalyse.

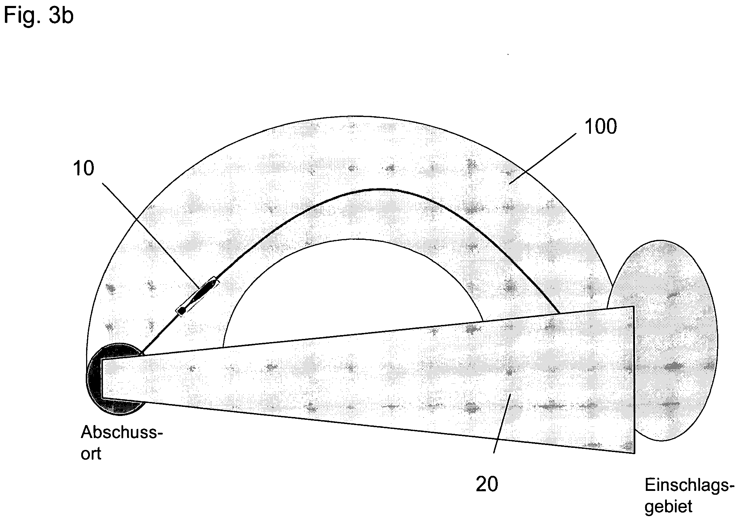

Um eindeutig nicht relevante Geschosse bereits vor Beginn des Klassifikationsalgorithmus zu eleminieren, kann eine Vorprüfung durchgeführt wird, die so ausgelegt wird, dass sie nur wenig Rechenaufwand benötigt. Dies kann z.B. dadurch geschehen, dass kinematische Daten des Geschosses mit der Lage von Abschussort (wie z.B. in der Flugprofilanalyse berechnet) und Einschlagspunkt eines bereits klassifizierten RAM-Geschosses 10 abgeglichen werden. Im Beispiel gemäß Fig. 3a wird dazu z.B. eine horizontale flächenhafte Prüfzone 20 erzeugt (in Fig. 3a zur Veranschaulichung um 90 Grad gedreht), welche den Abschussort und den Einschlagsort umfasst. Sie ist hier als Dreieck ausgebildet, dessen Spitze am Abschussort und dessen gegenüberliegende Seite im Bereich des Einschlagsgebiets liegt. Ein erfasstes Geschoss wird aus der Bearbeitung eliminiert, falls seine kinematischen 2-dimensionalen Positionsdaten eine Berührung mit diesem Flächenbereich als unwahrscheinlich erscheinen lassen. Eine weitere vorteilhafte geometrische Form für die flächenhafte Prüfzone 20 zur 2-dimensionalen Vorprüfung kann beispielsweise ein gleichschenkliges Trapez sein, wie in Fig. 3b dargestellt. Mit dieser speziellen Form soll die Ungenauigkeit der Positionsbestimmung des vermuteten Abschussortes kompensiert werden.

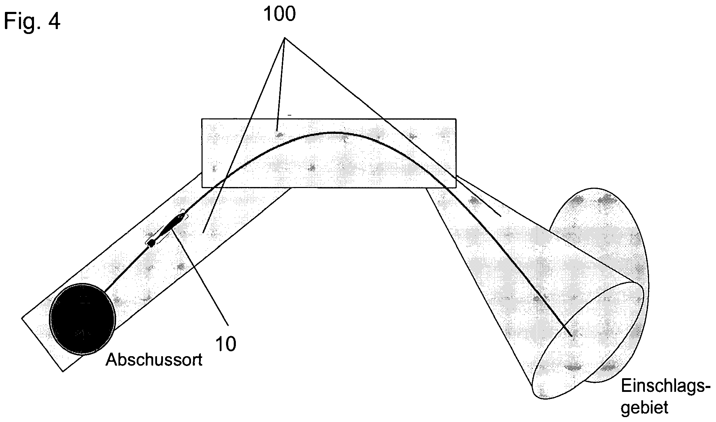

Fig. 4 zeigt eines weitere Ausführung der räumlichen Prüfzone 100, die hier zur Vereinfachung der Berechnung aus mehreren Teilsegmenten zusammengesetzt ist, wobei diese Teilsegmente von einfacher geometrischer Form sind (Quader, Kegel, etc). Selbstverständlich sind auch andere Formen möglich, z.B. Torussegmente. Vorteilhafterweise werden zu den Teilsegmenten die kinematischen Werte aus der Flugprofilanalyse des Zieles hinterlegt. Diese können als zusätzliche Prüfkriterien für neu zu klassifizierende Ziele innerhalb der räumlichen Prüfzone 100 Verwendung finden, um die Sicherheit in die Klassifikation zu erhöhen, wenn auf Grund einer einzigen Prüfung eine Klassifikationsentscheidung getroffen werden soll.

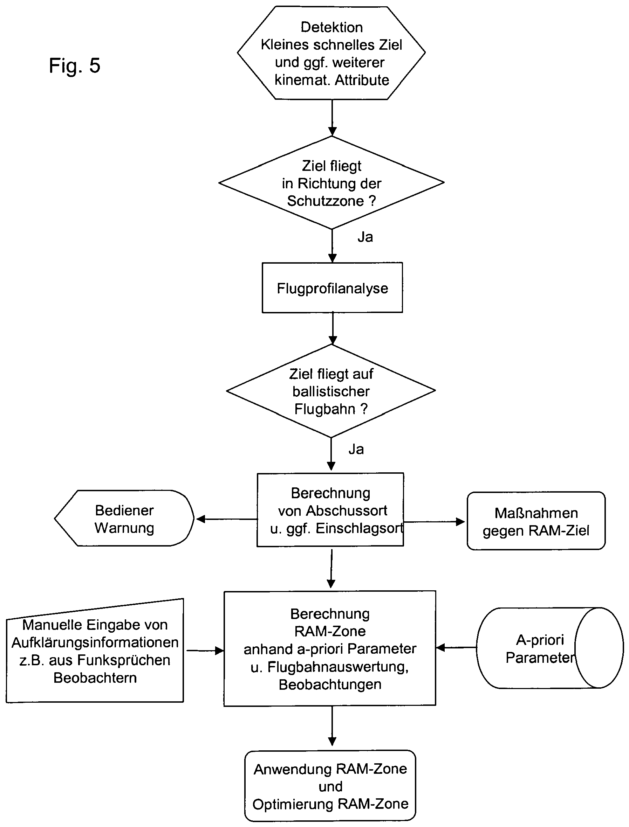

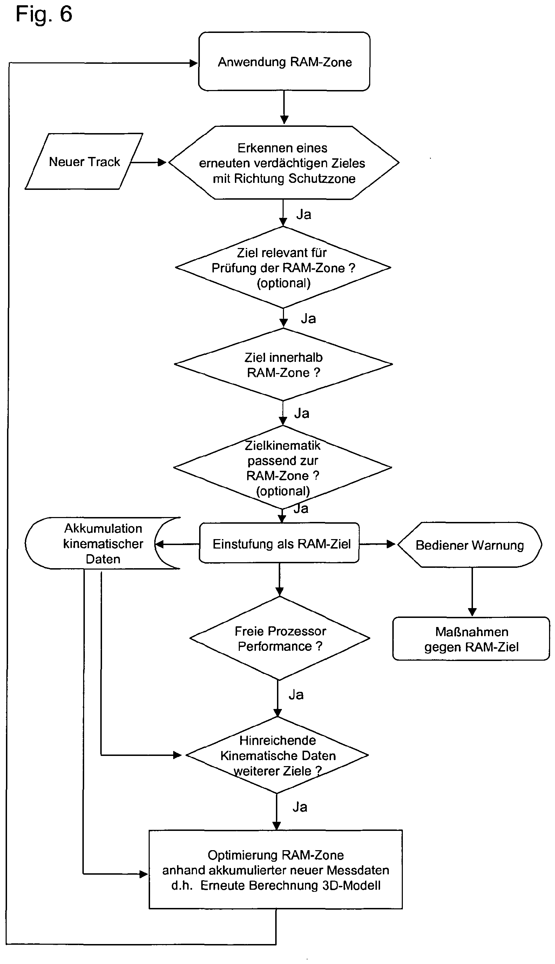

Fig. 5 zeigt den Ablauf zur Berechnung der räumliche Prüfzone. Sobald die Überwachungssenoren ein kleines, schnelles Ziel aufgefasst haben und dessen Richtung als relevant für die Schutzzone bestätigt ist, wird eine Flugprofilanalyse des Geschosses durchgeführt, mit der dessen kinematische Daten ermittelt werden. Ergibt sich daraus, dess es sich auf einer ballistischen Flugbahn bewegt, wird das Geschoss als RAM-Ziel klassifiziert und es erfolgt die Berechung des voraussichtlichen Einschlagsorts. Gleichzeitig werden Gegenmaßnahmen gegen das RAM-Ziel eingeleitet. Gemäß der Erfindung wird auf der Basis der berechneten Flugbahn des RAM-Ziels die räumliche Prüfzone generiert. Dazu können u.a. auch manuelle Eingaben vorgenommen werden, um zum Beispiel Aufklärungsinformationen zu berücksichtigen. Die so berechnete räumliche Prüfzone (in den Fig. 5 und 6 als RAM-Zone bezeichnet) steht nunmehr für die weitere Klassifikation neu auftretender Geschosse zur Verfügung.

Die Anwendung der so generierten räumlichen Prüfzone ist in Fig. 6 dargestellt. Sobald von den Beobachtungssensoren ein neues Geschoss aufgefasst wird, das aufgrund seiner Kinematik (z.B. aufgrund bestimmter Schwellwerte für die Mindestgeschwindigkeit oder Mindestbeschleunigung) oder Größe, Richtung etc. als verdächtig eingestuft wird, wird geprüft, ob dieses sich innerhalb der zuvor generierten räumlichen Prüfzone befindet. Diese Prüfung kann zusätzlich durch Vergleich mit der Kinematik des der räumlichen Prüfzone zugrundeliegenden RAM-Geschosses ergänzt werden. Sie erhöht die Sicherheit der Klassifikation.

Der Prüfung, ob sich das Ziel innerhalb der räumlichen Prüfzone befindet, kann eine Vorprüfung vorgeschaltet werden, welche so ausgestaltet ist, dass sie nur geringen Rechenaufwand benötigt. Sie dient dazu, Ziele vorab auszufiltern, die für die Prüfung der räumlichen Prüfzone nicht in Betracht kommen. Die Vorprüfung kann z.B. durch Abgleich mit dem Abschuss- und Einschlagsort des früheren RAM-Geschosses, oder durch Abgleich mit für RAM-Geschosse charakteristischen kinematischen Daten erfolgen.

Wird ein Geschoss als RAM-Geschoss erkannt, werden Maßnahmen zu dessen Abwehr eingeleitet.

Darüber hinaus können die kinematische Daten von Geschossen, die als RAM-Geschosse detektiert werden, in einen externen Speicher abgelegt werden. Dabei kann es sich sowohl um die Daten von Geschossen handeln, die gemäß der erfindungsgemäßen Klassifikation als RAM-Ziele erkannt wurden, als auch um solche Geschosse, für die eine vollständige Flugprofilanalyse durchgeführt wurde. Mit Hilfe dieser Daten kann die Genauigkeit der räumlichen Prüfzone fortlaufend verbessert werden. Die Optimierung der räumlichen Prüfzone kann - wie in Fig. 6 dargestellt - durch den vorhandenen Prozessor stattfinden, und zwar in Zeiten, in denen freie Rechnerleistung vorhanden ist. Alternativ kann diese Aufgabe auch durch einen zweiten Prozessor übernommen werden. In jedem der beiden Fälle wird sichergestellt, dass die fortlaufende Klassifikation der Geschosse nicht beeinträchtigt wird.

## Patentansprüche

1. Verfahren zur Klassifikation von RAM-Geschossen, **dadurch gekennzeichnet, dass** um die ballistische Flugbahn eines früheren, mittels Flugprofilanalyse klassifizierten RAM-Geschosses (10) herum eine räumliche Prüfzone (100) generiert wird, wobei die Generierung der Prüfzone (100) unter Verwendung von a-priori Daten, die das typisches Flugverhalten von RAM-Munition wiederspiegeln und/oder von kinematischen Daten des früheren RAM-Geschosses (10) erfolgt, und wobei zur Klassifikation eines neu auftretenden Geschosses geprüft wird, ob es sich an mindestens einem Zeitpunkt innerhalb der zuvor generierten räumlichen Prüfzone (100) befindet.

2. Verfahren nach Anspruch 1, **dadurch gekennzeichnet, dass** das Klassifikationsergebnis zusätzlich unter Verwendung von kinematischen Daten des früheren RAM-Geschosses (10) verifiziert wird.

3. Verfahren nach einem der vorangehenden Ansprüche, **dadurch gekennzeichnet, dass** vor der Klassifikation eine Vorprüfung mit geringerem Rechenaufwand durchgeführt wird, und zwar durch Abgleich mit dem Abschuss- und Einschlagsort des früheren RAM-Geschosses (10), oder durch Abgleich mit für RAM-Geschosse charakteristischen kinematischen Daten.

4. Verfahren nach Anspruch 3, **dadurch gekennzeichnet, dass** der Abgleich mit den Abschuss- und Einschlagsorten derart durchgeführt wird, dass auf der Basis des Abschuss- und Einschlagsorts eine flächenhafte Prüfzone (20) um Abschuss- und Einschlagsort herum generiert wird, welche mit den zweidimensionalen Positionsdaten des RAM-Gechosses (10) abgeglichen wird.

5. Verfahren nach einem der vorangehenden Ansprüche, **dadurch gekennzeichnet, dass** die Generierung der räumlichen Prüfzone (100) durch Einbeziehung ballistischer Flugbahnen und/oder kinematischer Daten weiterer RAM-Geschosse fortlaufend optimiert wird.

## Claims

1. Method for classifying RAM projectiles, **characterized in that** a spatial testing zone (100) is generated around the ballistic trajectory of an earlier RAM projectile (10) classified by means of flight profile analysis, wherein the generation of the testing zone (100) is performed by using a priori data that reflect the typical flying characteristics of RAM munition and/or by using kinematic data of the earlier RAM projectile (10), and wherein, for the classification of a newly occurring projectile, it is tested whether it is at least at one point in time within the previously generated spatial testing zone (100) .

2. Method according to Claim 1, **characterized in that** the classification result is additionally verified by using kinematic data of the earlier RAM projectile (10) .

3. Method according to one of the preceding claims, **characterized in that,** before the classification, a preliminary test is carried out with less computational effort, to be precise by comparison with the firing point and impact point of the earlier RAM projectile (10), or by comparison with kinematic data that are characteristic of RAM projectiles.

4. Method according to Claim 3, **characterized in that** the comparison with the firing and impact points is carried out in such a way that, on the basis of the firing point and impact point, an areal testing zone (20) is generated around the firing point and impact point and compared with the two-dimensional position data of the RAM projectile (10).

5. Method according to one of the preceding claims, **characterized in that** the generation of the spatial testing zone (100) is continuously optimized by including ballistic trajectories and/or kinematic data of further RAM projectiles.

## Revendications

1. Procédé de classification de projectiles en RAM (matériau absorbant les ondes radar), **caractérisé en ce qu'**une zone de contrôle spatiale (100) est générée autour de la trajectoire de vol balistique d'un projectile en RAM (10) précédent, classifié au moyen d'une analyse du profil de vol, la génération de la zone de contrôle (100) étant effectuée en utilisant des données à priori qui reflètent le comportement de vol typique d'une munition en RAM et/ou des données cinématiques du projectile en RAM (10) précédent, et la classification étant effectuée en vérifiant, pour un nouveau projectile apparu, s'il se trouve au moins à un instant à l'intérieur de la zone de contrôle spatiale (100) générée précédemment.

2. Procédé selon la revendication 1, **caractérisé en ce que** le résultat de la classification est vérifié en utilisant des données cinématiques du projectile en RAM (10) précédent.

3. Procédé selon l'une des revendications précédentes, **caractérisé en ce qu'**un précontrôle avec un effort de calcul plus faible est effectué avant la classification, et ce par une comparaison avec le lieu de tir et d'impact du projectile en RAM (10) précédent ou par une comparaison avec des données cinématiques caractéristiques de projectiles en RAM.

4. Procédé selon la revendication 3, **caractérisé en ce que** la comparaison avec les lieux de tir et d'impact est effectuée de telle sorte qu'une zone de contrôle (20) en surface autour du lieu de tir et d'impact est générée en se basant sur le lieu de tir et d'impact, laquelle est comparée avec les données de position bidimensionnelles du projectile en RAM (10).

5. Procédé selon l'une des revendications précédentes, **caractérisé en ce que** la génération de la zone de contrôle spatiale (100) est optimisée continuellement en intégrant des trajectoires de vol balistiques et/ou des données cinématiques de projectiles en RAM supplémentaires.
